## Europäisches Patentamt
## European Patent Office
## Office européen des brevets

(11) Veröffentlichungsnummer: **0 218 971**
**A2**

(12) **EUROPÄISCHE PATENTANMELDUNG**

(21) Anmeldenummer: 86113280.1

(22) Anmeldetag: 26.09.86

(51) Int. Cl.4: **G06F 1/02** , G06F 7/552

(30) Priorität: 30.09.85 DE 3534832

(43) Veröffentlichungstag der Anmeldung:
22.04.87 Patentblatt 87/17

(84) Benannte Vertragsstaaten:
DE FR GB NL SE

(71) Anmelder: **Siemens Aktiengesellschaft Berlin und München**
**Wittelsbacherplatz 2**
**D-8000 München 2(DE)**

(72) Erfinder: **Busch, Hans-Joachim, Dipl.-Ing.**
**Muth-Strasse 9**
**D-8000 München 71(DE)**

(54) **Arbeitsverfahren zur Lösung der Gleichungen des Typs z = k x1 y1 op x2 y2 op ... op xn ym.**

(57) Zur Lösung der Gleichung

$$z = \sqrt[k]{x_1^{y1} \; op \; x_2^{y2} \; op \ldots op \; x_n^{ym}}$$

erfolgt in einem ersten Schritt die Verarbeitung der unabhängigen und abhängigen Veränderlichen $x_1$, $x_2 \ldots x_n$, $z$ zur Bestimmung des Radikanten unter Verwendung digitaler Bausteine eines Rechners durch Ausführen elementarer Rechnungsoperationen und durch Potentieren. In einem weiteren Verfahrensschritt wird ein genäherter Anfangs-Lösungswert für die abhängige Veränderliche $z$ berechnet und in einem Komparator mit dem errechneten Wert des Radikanten verglichen. Durch rekursive Iteration des genäherten Wertes der abhängigen Veränderlichen $z$ in einer auf den Komparator rückgekoppelten Schaltung mit einem Demultiplexer mit einem Zähler, einem Speicher und einem Register sowie einer Ablaufsteuerung erfolgt eine sukzessive Approximation der Gleichung.

FIG 1

## Arbeitsverfahren zur Lösung von Gleichungen des Typs

$$z = \sqrt[k]{x_1^{y_1} \; op \; x_2^{y_2} \; op \ldots op \; x_n^{y_m}}$$

Die Erfindung bezieht sich auf ein Arbeitsverfahren zur Lösung des Typs

$$z = \sqrt[k]{x_1^{y_1} \; op \; x_2^{y_2} \; op \ldots op \; x_n^{y_m}}.$$

Der Erfindung liegt die Aufgabe zugrunde, mittels eines Iterationsverfahrens eine sukzessive Approximation der Gleichung des Typs

$$z = \sqrt[k]{x_1^{y_1} \; op \; x_2^{y_2} \; op \ldots op \; x_n^{y_m}}$$

unter Verwendung von Digitalrechnern herbeizuführen. Gemäß der Erfindung wird diese Aufgabe dadurch gelöst, daß die Verarbeitung der unabhängigen und abhängigen Veränderlichen $x_1$, $x_2$ ...$x_n$, z zur Bestimmung des Radikanten der expliziten oder impliziten Form der Gleichung

$$z = \sqrt[k]{x_1^{y_1} \; op \; x_2^{y_2} \; op \; \ldots \; op \; x_n^{y_m}}$$

durch Potentieren und/oder durch Ausführen elementarer Rechnungsoperationen und unter Verwendung digitaler Bausteine eines Rechners erfolgt, derart, daß in einem weiteren mit einer Näherungsformel programmierten Rechner ein genäherter Anfangs-Lösungswert für die abhängige Veränderliche z berechnet und in einem Komparator der im digitalen Rechner ermittelte Radiant mit dem potentierten Wert einer unabhängigen bzw. abhängigen Veränderlichen verglichen wird und daß die Approximation durch Iteration des Vergleichsvorganges im Komparator unter Verwendung einer rekursiven Schleife erfolgt, derart, daß von dem im programmierbaren Rechner gebildeten Näherungswert zwei verschiedene Anfangswerte für einen Zähler und einen Zwischenspeicher gebildet werden und daß der mit der vorgegebenen Wortbreite der Lösung geladene Zähler über einen Demultiplexer das höchstwertige Bit des in den Zwischenspeicher eingeschriebenen Anfangswertes adressiert und daß die rekursive Iteration dieses Vorgangs bis zur Erfüllung eines Abbruchkriteriums fortgesetzt wird.

Insbesondere kann nach diesem Arbeitsverfahren die Lösung der für Bildelement-Generatoren in Anzeige-Steuereinheiten wichtigen Gleichung

$$z = \sqrt{x_1^2 + x_2^2}$$

mit beliebig vorgegebenen Genauigkeitsanforderungen erzielt werden.

Sowohl die Gleichung in der allgemeinen Form $z^k = x_1^{y_1} \; op \; x_2^{y_2} \; op \ldots op x_n^{y_m}$ als auch die davon für eine bestimmte Anwendung abgeleitete Gleichung

$$z = \sqrt{x_1^2 + x_2^2}$$

kann mit einer Anordnung zur Durchführung des Arbeitsverfahrens gelöst werden, die als technische hardware einen aus digitalen Bausteinen - (Multiplizierer, Addierer) bestehenden Schaltungsteil zur mathematischen Aufbereitung des Radikanten der Gleichung in expliziter Form, eine Vergleichsschaltung (Komparator) und einen rekursive Iterationsschleife zur sukzessiven Approximation beinhaltenden Schaltungsteil und eine Ablaufsteuerung umfaßt.

Gemäß einer vorteilhaften Weiterbildung der Erfindung besteht die rekursive Iterationsschleife aus einem von einem Zähler gesteuerten Demultiplexer, der mit dem Ausgang eines Komparators verbunden ist, einen Latch, dessen Ausgang einem Rechenwerk zur rechnerischen Aufbereitung der Gleichung zurückgeführt ist.

Die Erfindung und weitere Einzelheiten der Erfindung werden anhand der Figuren 1 bis 4 beispielsweise erläutert. Es zeigen

FIG 1 das Blockschaltbild einer Schaltungsanordnung zur Durchführung des Verfahrens für Gleichungen in der allgemeinen Form

$$z = \sqrt[k]{x_1^{y1} \ op \ x_2^{y2} \ op \ ... \ op \ x_n^{ym}} \ .$$

FIG. 2 ein Blockschaltbild zur Lösung der Gleichung

$$z = \sqrt{x_1^2 + x_2^2}$$

nach Umformung in eine implizite Form.

FIG 3 ein weiteres Ausführungsbeispiel für die Lösung der Gleichung

$$z = \sqrt{x_1^2 + x_2^2}$$

in expliziter Form.

FIG. 4 ein Blockschaltbild für ein weiteres Ausführungsbeispiel zur Lösung der Gleichung

$$z = \sqrt{x_1^2 + x_2^2} \ .$$

Zur Durchführung des Arbeitsverfahrens zur Lösung der Gleichung in der allgemeinen Form ist durch Potentieren einer Umformung vorzunehmen.

$$z^k = x_1^{y1} \ op \ x_2^{y2} \ op \ ... \ op \ x_n^{ym} \ .$$

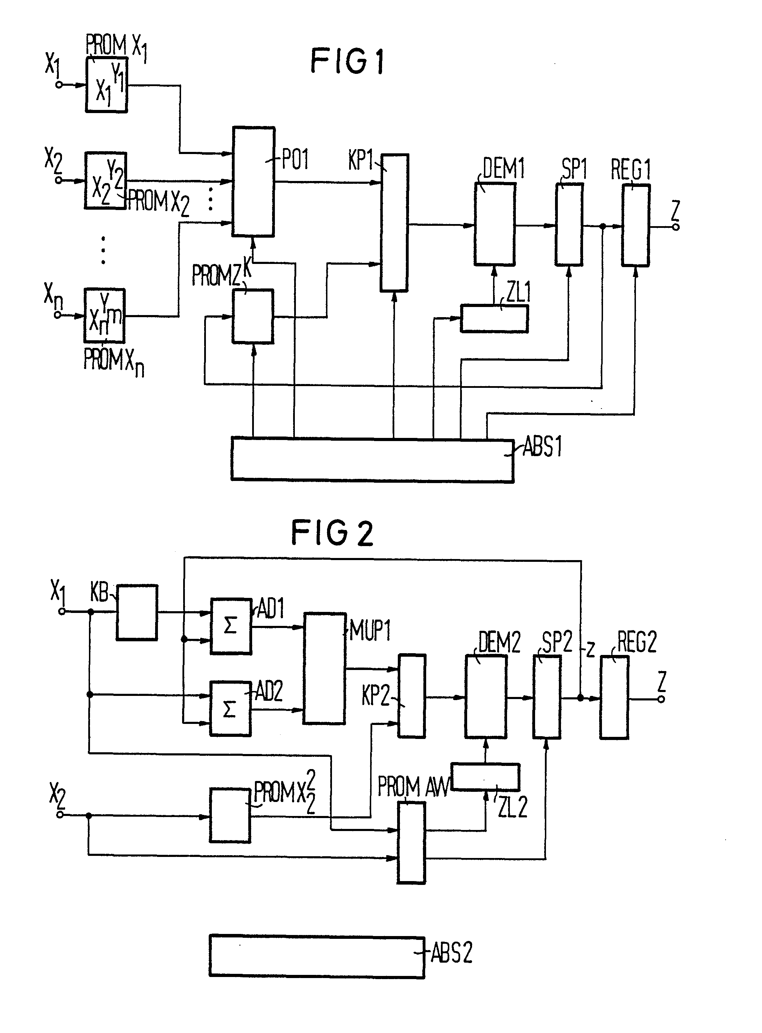

Mit Hilfe der Schaltungsanordnung nach FIG 1 wird derjenige Wert z durch sukzessive Approximation gesucht, der mit k potentiert dem Ausdruck

$x_1^{y1} \ op \ x_2^{y2} \ op \ ... \ op \ x_n^{ym}$ entspricht. Eingangsseitig besteht die Schaltungsanordnung aus einer Anzahl von programmierbaren Festspeicher-Bausteinen (PROM $x_1$...PROM $x_n$), denen eingangsseitig die unabhängigen Veränderlichen $x1$, $x_2$, $x_n$ zugeführt werden. Die in den Multiplizierern potentierten Werte $x_1^{y1}$, $x_2^{y2}$, $x_n^{y2}$, $x_n^{ym}$ werden in einem nachfolgenden Rechenwerk PO1 entsprechend einer vorgegebenen Grundrechnungsart weiter aufbereitet und das Ergebnis einem Komparator KR1 zugeführt. Der Vergleichswert für den Komparator wird in einem programmierbaren Festspeicher-Baustein PROM $Z^K$ als Näherungswert der abhängigen veränderlichen z in der Potenz von k gebildet. Der wesentliche Teil der Iterationsschaltung wird aus einem Demultiplexer DEM1 mit einem Zähler ZL1, einem Speicher SP1 und einem Register REG1 gebildet. Die Iterationsschleife schließt sich vom Ausgang des Speichers SP1 über den Festspeicher PROM $Z^K$ und den Kompara tor KP1 der Schaltung. Die einzelnen Schritte des Arbeitsverfahrens sind durch eine Ablaufsteuerung ABS1 festgelegt. Der Ausgang des Registers REG1 soll denjenigen Wert z liefern, der mit k potentiert dem Ausdruck $x1^{y1}$, op x x2 $^{y2}$ op...op x $x_n$ $^{ym}$ entspricht. Hierzu wird vor Beginn der Rechneroperation der Zähler ZL1 mit der geforderten z-Wortbreite l geladen. Die erforderliche Wortbreite w des Zählers ZL1 beträgt damit w = ldl.

Der Zähler ZL1 adressiert über den Demultiplexer DEM1 das höchstwertige Bit des in dem Speicher SP1 einzureibenden Wortes z $_A$, das vorerst auf logisch "1" gesetzt ist. Alle niederwertigen Bits bleiben im logischen "0"-Zustand. Der im Rechenwerk 5 erstellte genäherte Anfangswert $z_A^K$ dient dem Komparator KP1 gemeinsam mit den in den programmierbaren Festspeicher $PROMX_1,...PROMX_n$ und dem Rechenwerk PO1 generierten Ausdruck x $_l^y$ 1 op x $x_2^{y2}$ op...op, $x_n$ $^{ym}$ zur Feststellung eines Vergleichsergebnisses.

Zeigt sich bei diesem Vergleich, daß

$x_A^K$ größer = $x1^{y1}$ op x $x_2^{y2}$ op... op x $x_n$ $^{ym}$, so bleibt das höchstwertige Bit von $z_A$ im Speicher SP1 auf logisch "1"; andernfalls wird es auf logisch "0" gesetzt. Zur Vorbereitung des nächsten Berechnungsdurchlaufes wird der Zähler ZL1 dekrementiert und schaltet den Demultiplexer DEM1 auf die nächst niedrigere Bit-Position 1 -1 des Speichers SP1. Die Rechenoperation wird in gleicher Weise so oft wiederholt bis eines der beiden Abbruchkriterien Zähler ZL1 = 0 oder $z_A^K$ = $x_1$ $^{y1}$ op x $x_2$ $^{y2}$ op ... op x x $_n$ $^{ym}$ erfüllt ist.

Der ermittelte Wert $z_A$ wird in das Register REG1 übernommen. Auf diese Weise lassen sich alle 1 Bit des gesuchten Wertes z mit einem Zähler von maximal 1LSB be stimmen.

FIG 2 zeigt ein Ausführungsbeispiel für eine Schaltung zur Lösung der vereinfachten Gleichung

$$z = \sqrt[k]{x_1^2 + x_2^2}.$$

Dieses Ausführungsbeispiel unterscheidet sich vom Arbeitsverfahren zur Lösung der allgemeineren Gleichung dadurch, daß eine implizite Gleichung für z realisiert wird. Nach einer einfachen mathematischen Umwandlung liegt der digitalen Berechnung folgende Form zugrunde.

$(z -x_1)$ $^x$ $(z + y_1)$ = x $_2^2$ .

Für eine der unabhängigen Veränderlichen $(x_1)$ besteht die Schaltung eingangsseitig aus zwei Addierern AD1, AD2 zur Summenbildung der Klammerausdrücke $(z -x_1)$ und $(z + x_1)$ die zur Produktbildung einem nachgestalteten Multiplizierer MUP1 zugeführt werden. Zur Vorzeichenumkehr der unabhängigen Veränderlichen $x_1$ für den Rechenvorgang im Addierer AD1 wird mittels eines vorgeschalteten 2er-Komplement-Bildners KB eine Vorzeichenumkehr des digitalen Wertes erreicht.

Die zweite unabhängige Veränderliche $x_2$ wird einem programmierbaren Festspeicher PROM x $_2^2$ zur Quadrierung zugeführt. Im Komparator KP2 wird ein Vergleich der aufbereiteten Teile der impliziten Gleichungsform durchgeführt.

Gleichzeitig wird in einem weiteren programmierbaren Festspeicherbaustein PROM AW auf den beiden unabhängigen veränderlichen $x_1$ und $x_2$ ein angenäherter Anfangswert der abhängigen Veränderlichen z nach folgender Beziehung gebildet.

z = 0,5 $^x$ $x_1$ + $x_2$ für $x_1$ > $x_2$

z = $x_1$ + 0,5 $^x$ $x_2$ für $x_1$ < $x_2$.

Die an den Ausgang des Komparators KP2 angeschlossene Iterationsschaltung besteht wieder aus einem Demultiplexer DEM2 mit einem Zähler ZL2, einem Speicher SP2 und einem Register REG2. Den Zähler ZL2 und der Speicher SP2 werden zur Reduzierung der Rechenzeit aus dem programmierbaren Festspeicherbaustein PROM AN mit einem angenäherten Anfangswert geladen, so daß nur noch die verbleibenden niederwertigen Bits des Wertes $z_A$ durch rekursive Iteration berechnet werden müssen. Der am Ausgang des Speichers SP2 abgenomme Wert z wird zur Summenbildung in den Addierern AD1, AD2 über die Rückführung angeboten.

Eine Ablaufsteuerung ABS2 steuert auch hier die Schrittfolge des Arbeitsverfahrens.

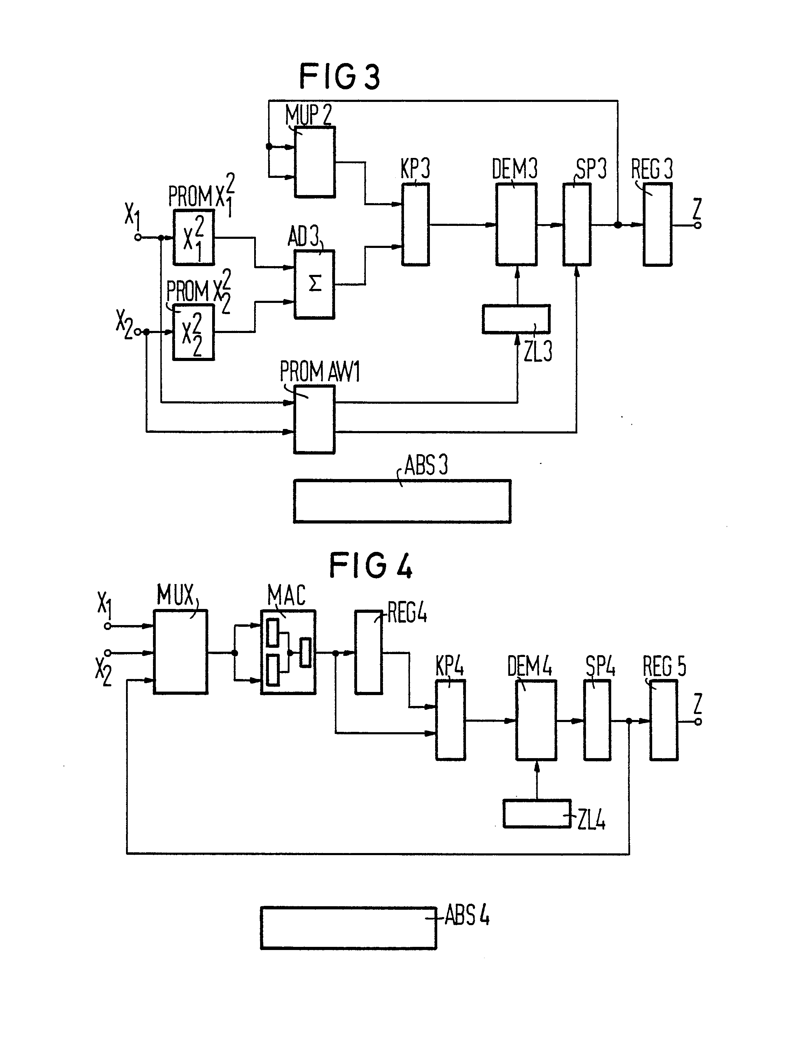

Im Ausführungsbeispiel nach FIG 3, das der Realisierung der vereinfachten Gleichung

$$z = \overline{\left| x_1 + x_2 \right|}$$

dient, entspricht der Aufbau der Schaltung und der Ablauf der einzelnen Rechenschritte weitgehend dem Ausführungsbeispiel nach FIG 1. Die Quadrierung der unabhängigen Veränderlichen $x_1$ und $x_2$ erfolgt in dem programmierbaren Festspeicher PROM $x_1^2$, PROM $x_2^2$ am Eingang der Schaltung. Das Rechenwerk besteht aus einem Addierer AD3. Im Multiplizierer MUP2 erfolgt die Quadrierung der abhängigen Veränderlichen $z$. Die Ausgangswerte des Multiplizierers MUP2 und des Addierers AD3 sind zur Bildung eines Vergleichsergebnisses an den Komparator KP3 geführt. Wie im Ausführungsbeispiel nach FIG 2 wird von den beiden unabhängigen Veränderlichen ein angenäherter Anfangswert in einem Festwertspeicherbaustein PROM AW gebildet, der wiederum dem Zähler ZL3 und dem Speicher SP3 zugeführt wird und eine Reduzierung der Rechenzeit der rekursiven Iterationsschaltung ermöglicht.

Das Ausführungsbeispiel nach FIG 4 ermöglicht eine aufwandsoptimierte Lösung der Gleichung

$$z = \sqrt{x_1 + x_2^2} \quad .$$

Die digitalen Bausteine zur rechnerischen Aufbereitung der Gleichung bestehen aus einem Multiplexer MUX und einem nachgeschalteten Multiplizierer-Akkumulator MAC. An drei Eingängen des Multiplexers MUX werden die beiden unabhängigen Veränderlichen $x_1$ und $x_2$ sowie der Wert $z$ über die Rückführung der Rekursionsschleife zugeführt. Zu Beginn der Rechenoperation wird durch den Multiplexer MUX die unabhängige Veränderliche $x_1$ auf den Multiplizierer-Akkumulator MAC geschaltet, der den Wert $x_1^2$ errechnet und intern im Akkumulator zwischenspeichert. Nach Umschaltung des Multiplexers MUX auf $x_2$ berechnet der Multiplizierer-Akkumulator MAC den entsprechenden Wert $x_2^2$ und addiert die beiden quadrierten Werte $x_1^2$ und $x_2^2$. Das Ergebnis wird in einem Register REG gespeichert. In einem weiteren Rechenschritt schaltet der Multiplexer MUX den Rückkopplungszweig auf den Multiplizierer-Akkumulator MAC, der den im Speicher SP4 gespeicherten Wert $z_A$ quadriert und einem Komparator KP zuführt. Die folgenden Rechenoperationen unter Einschaltung der Iterationsschaltung mit einem Demultiplexer DEM4 und einem zugehörigen Zähler ZL4 dem Speicher SP4 und einem Ergebnisregister REG5 gleichen den im Ausführungsbeispiel nach Fig. 1 beschriebenen Schritten für die Lösung der allgemeinen Gleichung, mit dem Unterschied, daß der im Speicher SP4 gespeicherte Wert $z_A$ über den Multiplexer MUX und den Multiplizierer-Akkumulator MAC dem Komparator KP4 zugeführt wird.

Bezugszeichenliste

$x_1, x_2 \ldots x_n$ = unabhängige Veränderliche

$z$ = abhängige Veränderliche

PROM $x_1$,

PROM $x_2$...PROM $x_n$

PROM $2^k$ } = programmierbare Festspeicher-Bausteine

PROM $x_2^2$

PROM AW, AW1

PO1 = Rechenwerk

Kp1...4 = Komparator

DEM1...3 = Demultiplexer

ZL1...4 = Zähler

Sp1...4 = Speicher

REG1...5 = Register

ABS1...4 = Ablaufsteuerung

AD1...3 = Addierer

MUP1,2 = Multiplizierer

KB = Zweierkomplement-Bildner

MUX = Multiplexer

MAC = Multiplizierer-Akkumulator

**Ansprüche**

1. Arbeitsverfahren zur Lösung von Gleichungen des Typs

$$z = \sqrt[k]{x_1^{y_1} \; op \; x_2^{y_2} \; op \ldots op \; x_n^{y_m}}$$

unter Verwendung von Digitalrechnern,

**dadurch gekennzeichnet,** daß die Verarbeitung der unabhängigen und abhängigen Veränderlichen $x_1, x_2 \ldots x_n, z$ zur Bestimmung des Radikanten der expliziten oder impliziten Form der Gleichung

$$z = \sqrt[k]{x_1^{y_1} \; op \; x_2^{y_2} \; op \ldots op \; x_n^{y_m}}$$

durch Potentieren, und/oder durch Ausführen elementarer Rechnungsoperationen unter Verwendung digitaler Bausteine eines Rechners erfolgt, derart, daß in einem weiteren mit einer Näherungsformel programmierten Rechner ein genäherter Anfangs-Lösungswert für die abhängige Veränderliche z berechnet und in einem Komparator (KP) der im digitalen Rechner ermittelte Radikant mit dem potentierten Wert einer unabhängigen bzw. abhängigen Veränderlichen verglichen wird und daß die Approximation durch Iteration des Vergleichsvorganges im Komparator (KP) unter Verwendung einer rekursiven Schleife erfolgt, derart, daß von dem im programmierbaren Rechner gebildete Näherungswert zwei verschiedene Anfangswerte für einen Zähler (ZL) und einen Zwischenspeicher (SP) gebildet werden und daß der mit der vorgegebenen Wortbreite der Lösung geladene Zähler (ZL) über einen Demultiplexer (DEM) das höchstwertige Bit des in den Zwischenspeicher (SP) eingeschriebenen Anfangswertes adressiert und daß die rekursive Iteration dieses Vorgangs bis zur Erfüllung eines Abbruchkriteriums fortgesetzt wird.

2. Schaltungsanordnung zur Durchführung des Verfahrens nach Anspruch 1,

**dadurch gekennzeichnet,**

daß

a) für die Aufbereitung der einzelnen Glieder der zu lösenden Gleichung programmierbare Festspeicherbausteine (PROMx₁...PROMxₙ) vorgesehen sind, die in einem Rechenwerk (PO1) mathematisch verknüpft werden,

b) die rekursive Iterationsschleife einen Komparator (KP1), einen Demultiplexer (DEM1) mit einem Zähler (ZL1), einen Speicher (SP1) und ein Register (REG1) umfaßt und ein Rückkopplungszweig vom Ausgang des Speichers (SP1) über einen programmierbaren Speicher (PROM $z^k$) zur Potenzbildung an einen Eingang des Komparators (KP1) geführt ist, dessen zweiter Eingang mit dem Ausgang des Rechenwerkes (PO1) verbunden ist,

c) eine Ablaufsteuerung (ABS1) zur Bildung genäherter Anfangswerte z_A für den Zähler (ZL1) und den Speicher (SD1) und zur Steuerung der einzelnen Verfahrensschritte vorgesehen ist.

3. Schaltungsanordnung nach Patentanspruch 1,

**dadurch gekennzeichnet,**

daß der digitale Rechner zur Aufbereitung der impliziten Form der Gleichung

$$(z - x_1) \bullet (z + x_1) = x_2^{\frac{2}{2}}$$

aus folgenden digitalen Bausteinen zusammengesetzt ist

a) 2 Addierer (AD1, AD2), denen eingangsseitig die unabhängige Veränderliche x und ein Näherungswert der abhängigen Veränderlichen z über den Rückkopplungsweg vom Ausgang des Speichers (SP2) der rekursiven Iterationsschaltung zugeführt werden,

b) ein Zweierkomplement-Bildner (KB), der zwischen der Eingangsklemme für die unabhängige Veränderliche x₁ und dem zugehörigen Eingang des Addierers (AD1) zur Durchführung einer Vorzeichenumkehr angeordnet ist,

c) ein Multiplizierer (MUP1) zur Produktbildung der Ergebnisse der beiden Addierer (AD1, AD2)

d) ein programmierbarer Festspeicherbaustein (PROMx $\frac{2}{2}$) an dessen Eingang die unabhängige Veränderliche x₂ zugeführt und dessen Ausgang mit einem Eingang des Komparators (KP2) der rekursiven Iterationsschaltung verbunden ist,

e) ein programmierter Festspeicherbaustein (PROMAW), dem eingangsseitig die unabhängigen Veränderlichen x₁ und x₂ zugeführt werden und angenäherte Anfangswerte z_A an den Zähler ZL2 und den Speicher (SP2) liefert,

f) eine rekursive Iterationsschaltung, deren Aufbau dem der Schaltung nach Anspruch 2 entspricht und eine Ablaufsteuerung (ABS2).

4. Schaltungsanordnung zur Durchführung des Arbeitsverfahrens nach Anspruch 1,

**dadurch gekennzeichnet,**

daß die digitalen Rechnerbausteine für die Aufbereitung der Gleichung in expliziter Form aus einem Multiplexer (MUX), einem Multiplizierer-Akkumulator (MAC) und einem Register (REG4) besteht, daß der Multiplexer (MUX) eingangsseitig mit Zuführungen der unabhängigen Veränderlichen x₁ und y₂ und über eine Rückkopplungsleitung mit dem Ausgang des Speichers (SP4) in der rekursiven Iterationsschaltung verbunden ist, daß der Multiplizierer-Akkumulator (MAC) mit dem Ausgang des Multiplexers (MUX) verbunden ist und daß die Ergebnisse des Multiplizierer-Akkumulators (MAC) über eine direkte Verbindung unmittelbar und über das Register (REG4) mit je einem Eingang des Komparators (KP4) verbunden ist.

## FIG 1

## FIG 2

# FIG 3

# FIG 4